# EUROPEAN PATENT SPECIFICATION

(11) **EP 2 024 796 B1**
(45) Date of publication and mention of the grant of the patent: **16.09.2015**
(21) Application number: 07734821.7
(22) Date of filing: 06.06.2007
(51) Int. Cl.: B30B 1/26, B30B 15/14, G05B 19/418

(54) **IMPROVED METHOD AND SYSTEM FOR OPERATING A CYCLIC PRODUCTION MACHINE IN COORDINATION WITH A LOADER OR UNLOADER MACHINE**
VERBESSERTES VERFAHREN UND SYSTEM ZUM BETREIBEN EINER ZYKLISCHEN PRODUKTIONSMASCHINE ZUSAMMEN MIT EINER LADE- ODER ENTLADEMASCHINE
PROCÉDÉ ET SYSTÈME AMÉLIORÉS D'EXPLOITATION D'UNE MACHINE DE PRODUCTION CYCLIQUE EN COORDINATION AVEC UNE MACHINE DE CHARGEMENT OU DE DÉCHARGEMENT

(30) Priority: 06.06.2006 EP 06011673
(43) Date of publication of application: 18.02.2009
(60) Divisional application: 09164828.7
(73) Proprietor: ABB Research Ltd, 8050 Zürich (CH)
(72) Inventor: BOSGA, Sjoerd, S-723 37 Västerås (SE)
(74) Representative: Savela, Reino Aleksi
(86) International application number: PCT/IB2007/001558
(87) International publication number: WO 2007/141649

(56) References cited:
- EP-A- 1 279 447
- EP-A- 1 615 090
- GB-A- 1 179 447
- US-A- 4 150 616
- US-A- 4 653 311
- US-A1- 2004 003 729
- US-B1- 6 242 877

## Description

### TECHNICAL FIELD.

The invention concerns an improved method for synchronising a first machine of a manufacturing process section with at least one second machine for loading and/or unloading the first machine. In particular, the invention discloses a process section in which the first machine comprises a mechanical press of a type used for pressings, stamping or punching of metal parts from blanks. The press is driven by at least one electric motor and the second machine is a loader or unloader machine such as an industrial robot.

### TECHNICAL BACKGROUND

Mechanical presses such as a link press, a crank press, or an eccentric press are commonly used to produce automobile parts stamped or pressed from steel blanks. Todays large mechanical presses are most often driven by a flywheel. The function of the flywheel is to store the necessary energy to carry out a pressing operation. A relatively low power electric motor drives the flywheel so that before the start of a press operation the flywheel is rotating at the speed at which the pressing will occur. Mechanical servo presses drives of the "direct drive" or mechanical servo type use the power of a relatively high power electric servo motor to provide the energy for pressing. Another type of servo press is a "hybrid drive" type, or hybrid press. In this design the flywheel still provides the necessary energy for pressing, but power for the movement of the press is supplied in part by an additional servo motor, generally a smaller motor in a hybrid press than in a direct servo mechanical press.

US4,653,311 describes a press of the traditional type which is used in cooperation with a second machine, a transfer mechanism, which transfer mechanism is controlled dependent on a position in the first machine, ie the angular position of the eccentric (or crank angle). GB 1,179,447 describes a power press acceleration control system in which a number of presses in a press line are controlled to run at the same constant operating speed as the first press. EP 1,615,090 describes synchronised control of a system of a line of machines, particularly presses, operating essentially at constant speed, in which the speed of a loader/unloader (second machine) may be varied, and in which the press may be stopped to enable the loader device to compensate for a delay. EP 1,279,447 describes a punch press with fixed points in a press cycle of HH1 to begin opening and HH2 just when the press closes. Acceleration of the servo motor of the press is constant. US6,242,877 describes a method and a graphic interface with which an operator can select or design one or more velocity profiles offline for more than one drive in a machine such as a thermal forming machine. This enables separate drives in a forming process to be controlled according to a selected velocity profile so that a machine or a workpiece reaches a selected point in the process at a selected time.

In large press lines for the automative industry, robots are often used to move parts from one press to the next. For optimal productivity, the motion of each unloading robot is synchronized to the motion of a press, and the motion of a loading robot is synchronized to the motion of the robot unloading the same press. The motion of the press itself can however not normally be controlled. Only the starting instant of the press operation can be chosen in relation to the motion of the loading robot.

The production cycle of a press as describe herein includes a pressing stage and a non-pressing stage. Stamping, pressing, punching, forming etc takes place during the pressing stage. After the pressing stage the non-pressing stage includes a first time after the press has begun to open in which a tool or robot may reach into the press and unload a workpiece that has been formed or pressed. After that and before the press closes a robot or other apparatus places a new workpiece in the press ready for the next pressing/forming operation. The objectives of the conventional type of synchronization of the press to the robot are commonly that:
- the press should reach a certain point of its motion (called "Die Protect", DP) during loading of a part or blank not before the robot has passed a certain point of its motion, principally the time when the robot loader has withdrawn from between the moving parts of the press. Failure to do so in time means a collision will occur, causing damage to the press die and/or the robot tool,
- the press should pass the DP point as shortly as possible after the robot has passed the above certain point of its motion. Failure to do so means loss of time, i.e. reduced productivity.

The synchronization mechanism of today is based on the assumption that the press is standing still in a well-defined position at the start of every press cycle, and that the press will then move with a pre-defined motion profile that cannot be varied. These operating conditions are a direct consequence of the mechanical construction of the press drive, which consists of a flywheel, a clutch and a brake. In contrast to that, servo press drives of either the "direct drive" or "hybrid drive" type, have fundamentally different constraints.

For example a servo press may be arranged with a drive that has a peak power of around 10 times the peak power of the motor that drives the flywheel in today's presses. Such a servo motor allows very rapid acceleration of the press from standstill to high speed. The press could thus be started and stopped in much the same way as a traditional flywheel-clutch-brake combination, and synchronization to robots would be very similar to the existing scheme. However, since such high peak power comes with unacceptably high drive and installation costs, one may instead use a press with a servo drive with much lower peak power. For example a peak power of the direct or auxiliary motor may be arranged to be between 1 and 4 times that of the traditional flywheel motor. A disadvantage of this approach is that accelerating the press from a standstill to maximum speed takes

### 1-1.5 seconds, which is much slower than accelerating using the clutch, and thus takes a significant part of the production cycle (which may typically be around 5 seconds total).

### SUMMARY OF THE INVENTION

According an aspect of the present invention an improvement is provided to methods for operating a first machine of a manufacturing process section arranged to carry out a production cycle, said production cycle comprising a pressing part and a non-pressing part, which said first machine is operated in conjunction with at least one second machine and which said first machine carries out a process during the working part of the cycle on a workpiece which is loaded into and/or unloaded out of said first machine by said at least one second machine during the non-working part of each process cycle, and synchronising said first machine to said second machine by controlling the speed of said first machine to decelerate said first machine at a point before the start point of an unloading stage after which unloading is permitted and dependant on a speed or position of said second machine.

According to an embodiment of the present invention an improvement is provided to methods for operating a first machine of a manufacturing process section arranged to carry out a production cycle, which said first machine is operated in conjunction with at least one second machine by synchronising the speed of said first machine to said second machine by controlling the speed of said first machine and accelerating or decelerating it according to an estimated time for said second machine to reach the beginning point or end point of an unloading or loading stage of the process cycle.

According to an embodiment of the present invention an improvement is provided to methods for operating a first machine of a manufacturing process section arranged to carry out a production cycle, which said first machine is operated in conjunction with at least one second machine by synchronising the speed of said first machine to said second machine by controlling the speed of said first machine and by decelerating said first machine at a start point before an estimated time at which said first machine shall reach the beginning of the unloading point stage towards zero speed and accelerating said first machine to reach the end point of the loading stage at the highest possible speed.

According to another embodiment of the present invention an improvement is provided to methods for operating a first machine of a manufacturing process section arranged to carry out a production cycle, said production cycle comprising a pressing part and a non-pressing part, which said first machine is operated in conjunction with at least one second machine and which said first machine carries out a process during the working part of the cycle on a workpiece which is loaded into and/or unloaded out of said first machine by said at least one second machine during the non-working part of each process cycle, and synchronising by reversing said first machine after reaching a zero speed and subsequently accelerating in a forward direction so that said first machine is running at the highest possible speed, which may be greater than a normal pressing speed, when it reaches the end point of the loading stage.

According to an embodiment of the present invention an improvement is provided to methods for operating a first machine of a manufacturing process section arranged to carry out a production cycle, which said first machine is operated in conjunction with at least one second machine and synchronising by reversing said first machine after reaching a zero speed and subsequently accelerating said first machine in the forward direction so that it reaches a zero speed for a second time such that said first machine is running at the highest possible speed when it reaches the end point of a loading stage.

According to another embodiment of the present invention an improvement is provided to methods for operating a first machine of a manufacturing process section arranged to carry out a production cycle, which said first machine is operated in conjunction with at least one second machine, and synchronising by upon detecting that the loading stage is being delayed, before the deceleration time has begun before beginning of unloading, by subsequently changing from positive torque to negative torque and accelerating said first machine in a forward direction from an increased reverse angle so that said first machine reaches the end of the loading stage in the shortest possible time.

According to another embodiment of the present invention an improvement is provided to methods for operating a first machine of a manufacturing process section arranged to carry out a production cycle, which said first machine is operated in conjunction with at least one second machine, and synchronising by estimating a time at which said second machine shall reach the beginning of the unloading point stage (UC), then calculating from the estimate a time at which said first machine shall reach the end point of the loading stage (DP).

According to another embodiment of the present invention an improvement is provided to methods for operating a first machine of a manufacturing process section arranged to carry out a production cycle, which said first machine is operated in conjunction with at least one second machine, and synchronising by calculating a point at which deceleration of said first machine is to be started, such that the speed of said first machine at the start of the unloading phase and at the end of the loading phase is as high as possible, and that the end of the loading phase point is reached at the moment loading is completed.

According to an embodiment of the present invention an improvement is provided to methods for operating a first machine of a manufacturing process section arranged to carry out a production cycle, which said first machine is operated in conjunction with at least one second machine by synchronising the speed of said first machine to said second machine by controlling the speed of said first machine wherein data describing the motion of said second machine collected during a finite or infinite number of previous cycles is used in addition, to calculate the desired time instant.

The invention comprises ways to adapt the motion of the press so that the press is synchronized to the motion of the unloader and/or loader robot, resulting in optimal cycle times. The proposed method comprises changing setpoints in the press motion depending on an estimated synchronization time point. The invention also provides a method for automatically optimizing the press line while in operation. Also, proposed methods are described that may be used for synchronizing the unloader robot to the press as well. To optimise the productivity of press lines and/or servo press line, motion of the presses should be synchronized to the motion of the loading equipment and vice versa. Especially for the reversing ("alternative bi-directional") motion, this requires a new concept for synchronization, different from what has been used for mechanical presses. A press line comprises a number of presses, usually arranged to carry out a sequence of operations. In this specification the term "press line" may also include a single press and a mechanised loader and/or unloader.

For the purpose of control the inventors describe the production (pressing) cycle as comprising two parts: the pressing stage, and the non-pressing stage. In the non-pressing stage the press is called "open". During the non-pressing stage the press is sufficiently opened for a loader/unloader to enter the press for loading and/or unloading. The open part of the cycle is limited by two points in the cycle. The first point is called here the UC point (unload cam), the earliest point in the cycle where the unloader can enter the press without any collision taking place. The second point is the DP point (die protect), the point after which the loader must be out of the press to avoid a collision. According to an aspect of the invention DP is not treated as a fixed position in the cycle. When the press is moving slowly (for example when braking) the press is allowed to move further down than when moving fast, since DP is chosen so that when at DP emergency braking is started, a loader or unloader inside the press is not touched. Since braking at high speed requires a braking longer distance, DP is higher (earlier in the cycle) at high speed than at low speed.

Servo drive (direct/full and hybrid) systems for mechanical presses introduce two new conditions on the synchronization of the press to the robot according to the invention, which conditions comprise:
- the press should pass the DP point as it is closing with as high speed as possible. Since the speed after DP affects the cycle time, the press should be accelerated as much as possible before this point. Note: before DP the cycle time depends on the speed of the robots, since here the press is essentially waiting for the robots; and,
- the press should pass the UC point as it is opening with as high speed as possible.

The second condition may require some further explanation. The UC point, where UC stands for Unload Cam, is the point in the press motion where the press has opened sufficiently for the unloader robot to enter the press. See for example Fig 8 where the UC point in a (clockwise) forward cycle is shown some degrees after pressing and, in this case, before TDC. From a control point of view, UC is the point in time of the beginning of the unloading stage.

Traditionally, the motion of the press near this point has no relation whatsoever with the synchronization of the press to a loader near the DP point. However according to the servo concept herein described, and in particular when using "alternative bi-directional motion" such as described in an EP application number EP 06011673.8 filed on 2006-06-06 the press may never stop completely between UC and DP. The inventors have determined that optimal press motion, for a given motor size, press, etc may in certain cases require starting full-torque deceleration before reaching UC, and upon reaching zero speed, reversing the press over a certain angle, also with full torque, and then, without pausing, re-accelerating the press with full torque until after passing DP.

Typically the main advantage is a shortened production cycle time. In production settings where more than one press works in a same or related production process, or is one press in a line of several presses, the inventive synchronisation methods provides greater opportunity for optimization of a press line by adaptively controlling the motion of each of the presses and feeders or transfer mechanisms/unloaders such as loading/unloading robots, in the process or press line.

For example, line coordination of an entire process section may be improved by controlling such a line using a single controller arranged to carry out methods according to an embodiment of the invention, due in part to the improved controllability of the direct servo or hybrid servo presses. Coordination or optimisation may be achieved in part by adapting speed during opening/closing a press (while for example maintaining a required speed and energy output during the pressing/stamping part of the cycle), resulting in cycle times which may be reduced dependent on parameters such as: a state of a downstream process; or a state of an upstream process or another consideration such as overall power consumption; reduced energy consumption; smoothing power consumption peaks in the press line.

A feature of the disclosed methods is that an improved prediction for the estimated time of arrival of the press at synchronisation points such as UC and DP is used. This estimate is also adaptive, and may be updated before the actual arrival at a synchronisation point. The imp0oved estimate is produced by a motor control function. Since the control of a direct servo or hybrid servo press is by means of motor control a frequency converter and a motor controls the motion of the press. The press controller is able to calculate and predict the exact moment the press will cross the unload-cam angle. Since press speed is controlled by the direct servo or hybrid servo motor, this prediction can be more accurate than a traditional prediction (which is based on an assumption of a constant speed operation for a traditional mechanical press with, for example, an eccentric wheel). The press control communicates the estimate of the moment it will arrive at UC to the unloader controller, which will control the unloader robot to enter the press exactly as soon as the press motion allows it on or after UC. While the press is moving closer to the unload-cam angle, the press control can, if necessary, send an updated prediction of time of arrival at UC to the unloader controller. The loader control in turn then communicates to the press control the moment it has calculated an estimated time for the loader to leave the press. The press control then determines when to start, resume, or change speed of the press motion and how to control the press speed such that the press crosses the die-protect angle DP at exactly at the moment the loader leaves the press. All the time while loading, the loader control can send, if necessary, and updated prediction.

As a result of this synchronization method, better synchronization will be possible than with today's system, resulting in a reduced cycle time. It may even be possible to increase the die-protect angle, which will result in a further reduction.

As only time instants are communicated between press control and unloader resp. loader control, the required communication bandwidth between these controllers is low. This is an advantage in case the press control is a separate unit, i.e. not integrated with unloader or loader control.

Another advantage of the invention is that it is applicable to a range of conditions. For example the proposed methods are not limited to the case where maximum motor torque is a constant. The torque used in deceleration and acceleration is advantageously equal to the maximum torque which the drive can supply, but this maximum may be a function of motor speed, of motor temperature, converter temperature, limitations imposed by gears, other mechanical constraints, etc.

Another advantage is that the proposed synchronization method is not limited to a mechanical press with an eccentric mechanism. It can be used on presses with a so-called link-drive mechanism as well, without modification. With some modifications, the method may also be used on a mechanical press using a ball-screw mechanism (typically using bi-directional operation). Also, the method can both be used for servo presses of the hybrid type (in which a clutch and flywheel is used to give force while pressing) and the direct type (in which no clutch is present).

Although the method is described for the case where the press in every cycle moves in the same direction, with some modifications the method can be used also on a press in which every other cycle is performed in a different direction (bi-directional motion).

The proposed method for predicting robot motion can also be used for predicting press motion. Since press motion depends on many parameters (masses of different parts of the mechanism, adjustment of pressure in counter-balance cylinders, mass of the upper die, etc), which are difficult to take into account in a press controller, it is proposed to analyse on-line the motion of the press for given settings such as pressing speed, position where deceleration is started at or before the beginning of the unloading stage, position or time or speed at which torque is reversed, max press speed). Based on the motion obtained during a finite or infinite number of previous press cycles, the above mentioned settings can be adapted such that an optimal cycle time and time instant for passing DP is obtained.

The method provides the highest possible productivity for a press line. Motion may be optimised in relation to other machines in a production sequence when for example blanks are loaded in the press and/or stamped parts unloaded from the press by transfer devices or other automated devices. Such other machines in the production sequence may be one or more robots. Controlling the press in synchronisation with control of the feeding by automatic feeders, other feeders, doppins, robot loaders/unloaders, etc provides the advantage of synchronization of feeder/loader motion and press motion, providing in reduced overall production process cycle times without compromising pressing quality. A press line comprises a number of presses, usually arranged to carry out a sequence operations. In this specification the term press line may also include a single press and a mechanised loader and/or unloader.

In a preferred embodiment of the method of the invention the method may be carried out by a computing device comprising one or more microprocessor units or computers. One or more control unit(s) comprise memory means or a memory storage device for storing one or more computer programs for carrying out the improved methods for controlling the operation of a mechanical press. Preferably such computer program contains instructions for the processor to perform the method as mentioned above and described in more detail below. In another embodiment the computer program is provided on a computer readable data carrier such as a DVD, or stored in a computer readable storage device.

### BRIEF DESCRIPTION OF THE DRAWINGS

Embodiments of the invention will now be described, by way of example only, with particular reference to the accompanying drawings in which:
FIGURE 1 is a schematic diagram showing a production cycle in which a non-pressing part is divided into three time intervals relevant to synchronising a press with a second machine, according to an embodiment of the invention;
FIGURE 2 is a schematic diagram showing speed-time profiles for a press cycle showing synchronisation points on the profiles relevant to synchronising a press with a second machine operating as a loader which may be late, according to an embodiment of the invention;
FIGURE 3, is a schematic diagram is showing speed-time profiles in a case where reversing movement of a press is limited to a small angle, according to another embodiment of the invention;
Figure 4 is a schematic press cycle showing the synchronisation points on the speed profiles on a press cycle in which reversing does not occur, according to an embodiment of the invention;
Figure 5 is a schematic flowchart showing a synchronisation method for synchronising the press to an unloader or loader robot in the case of a late unloader, according to an embodiment of the invention;
Figure 6 is a schematic flowchart showing a synchronisation method for synchronising the press to a loader or unloader robot in the case of an early loader, according to another embodiment of the invention; and Figure 8 is a schematic diagram for a press production cycle showing a forward angular rotation in a clockwise direction, with reversing, together with angular positions of UC and DP according to an embodiment of the invention.

### DETAILED DESCRIPTION OF THE EMBODIMENTS

Synchronization of the press to a loader robot or other loader machine as described here comprises two parts. The first part is related to obtaining a prediction of the instant when the loader robot will pass the synchronization point. The second part consists of methods for adapting the press motion so that optimal synchronization is obtained.

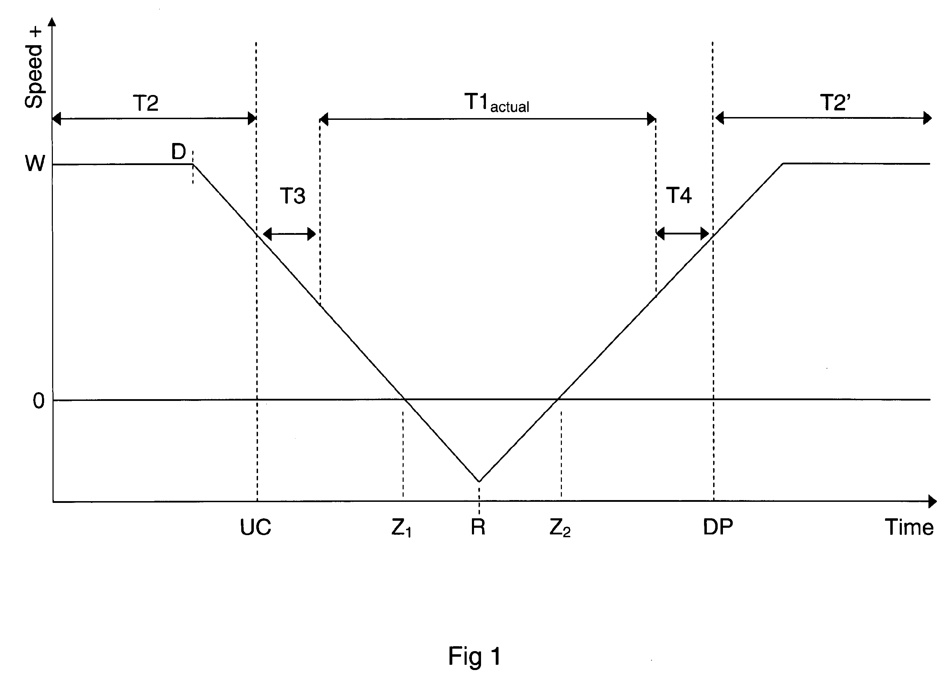

Synchronisation may be described in terms of dividing the cycle of the press into the following four parts, as shown in Figure 1. The figure shows a speed/time diagram for press cycle. This shows, staring from the left side of the diagram the press running at a speed W which may be a maximum speed. At or after D, a point before UC (unload cam, the earliest point for unloading) deceleration of the press may begin. After UC the non-pressing stage has begun. Figure 1 shows that during the non-pressing stage there are three parts T3, T1 and T4, where:
- T3 is the time between the moment the press crosses UC position and the moment the unloader enters the press;
- T1 is the time the unloader and the loader are inside the press;
- T4 is the time the loader is outside the press, before the press crosses DP position.

Secondly and during the pressing stage T2:
- T2 is the time the press is closed, this includes closing, pressing (working part of the cycle) and opening; this is the total time between passing DP and passing UC. Total cycle time, which determines productivity, is T1+T2+T3+T4.

The goal of the synchronization of the unloader to the press is to minimize T3 ie so that T3 should approach zero or be zero. Another goal of the synchronization of the unloader to the press is also to ensure that the unloader enters the press as fast as possible, so as to minimize the unloader dependent part of T1. The goal of synchronization of the loader to the unloader is also to minimize T1.

The goal of the synchronization of the press to the loader may be related to more than one time period. First of all synchronization shall minimize T4. When T4 is zero, this means that the press crosses DP exactly when the loader leaves the press (although there may be some safety margin included). Second, it aims to minimize the total pressing stage time T2. This is done by ensuring that the speed of the press at DP and the speed of the press at UC are both as high as possible. In a steady state, an optimum for T2 is found where the speed at UC and the speed at DP may be approximately equal.

In case of very fast unloader/loader equipment, or a very powerful servo drive, or a very large angular distance between DP and UC, the speed at UC and DP may be equal to the maximum speed of the press. In that case, deceleration of the press can be started after UC, and re-acceleration will complete at or before DP. In this case, it may be possible to operate the drive (between UC and DP) at less than maximum torque, without deterioration of the cycle time. This would be appropriate to reduce energy losses in the drive.

However, typically these three conditions are not all fulfilled. In this case, the shortest possible cycle time is obtained by operating the motor at maximum torque during deceleration, any possible reversing, and re-acceleration. In this case, deceleration will be started before reaching UC, at a point D, and reacceleration will continue even after passing point DP.

Since the control of a direct servo or hybrid servo press is by means of motor control, eg a frequency converter and a motor controls the motion of the press. The press controller is able to calculate and predict the exact moment the press will cross the unload-cam angle. Since press speed is controlled, this prediction can be more accurate than a traditional prediction (which is based on the assumption of constant speed operation of a mechanical press with, for example an eccentric wheel). The press control communicates the estimate of the moment it will arrive at UC to the unloader controller, which will control the unloader robot to enter the press exactly as soon as the press motion allows it on or after UC. While the press is moving closer to the unload-cam angle, the press control can, if necessary, send an updated prediction of time of arrival at UC to the unloader controller.

The loader control in turn then communicates to the press control the moment it calculates an estimated time to leave the press. The press control then determines when to start or resume the press motion and how to control the press speed such that the press crosses the die-protect angle DP at exactly at the moment the loader leaves the press. All the time while loading, the loader control can send, if necessary, and updated prediction the estimated time to leave the press to the press control. Unlike in today's mechanical presses, the servo press will allow a degree of adaptation of the press motion even after starting the motion.

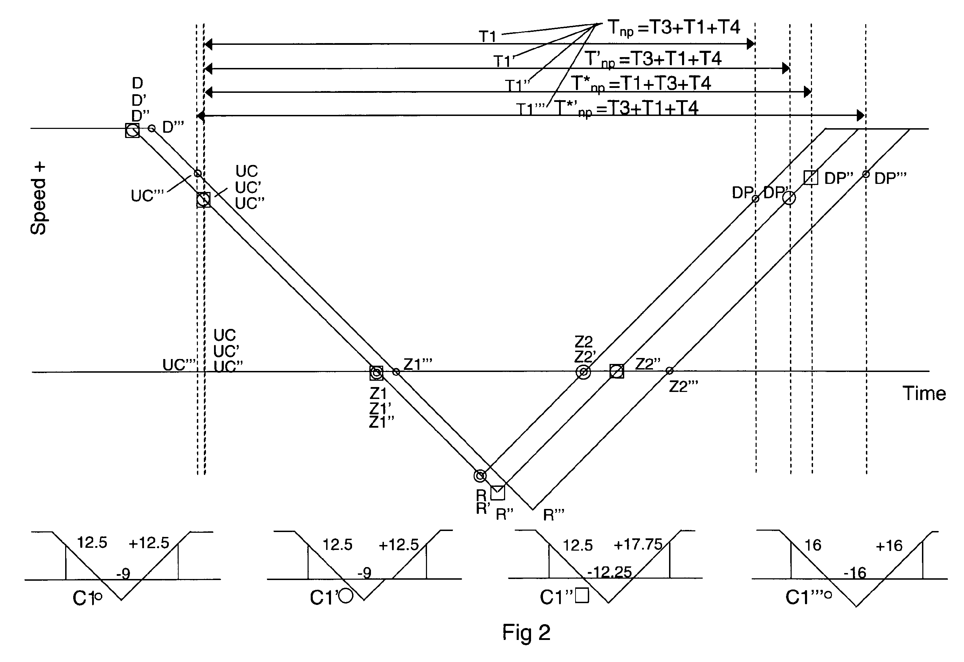

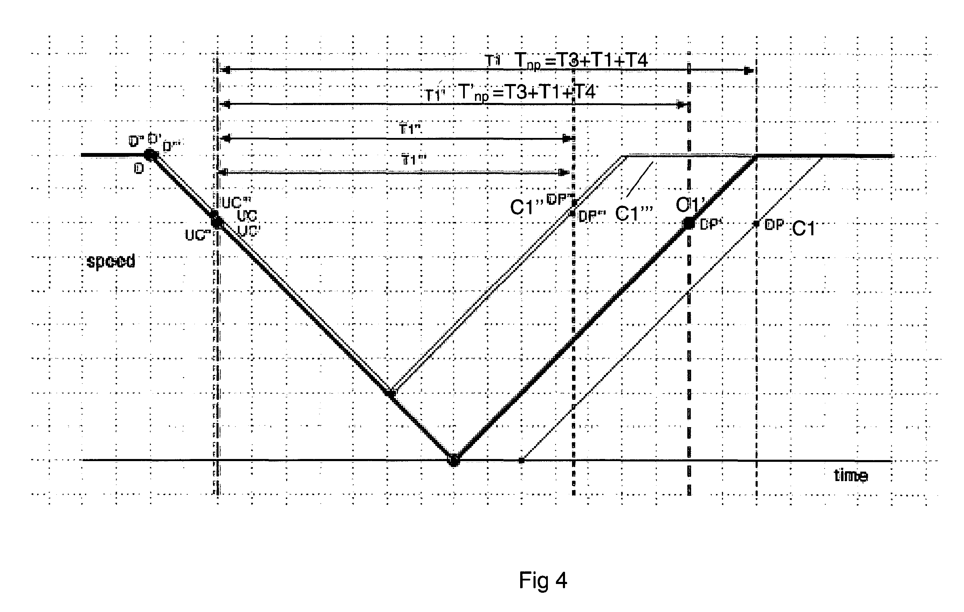

Three methods for synchronization are described in Figs 2-4, one of which, the C1 line of Fig 4, is similar result to synchronization of a mechanical press, but the other methods are new and specific to the servo press with bi-directional motion. Methods for synchronizing to a late loader are illustrated in Figure 2. Figure 2 shows four speed profiles C1, C1', C1", C1'" on axes of press speed and time. All four profiles pass a point at the beginning UC of an unloading stage, at which a time Tₙₚ starts to run. The figure shows a first profile C1. In the figure, T3+T1+T4 is the time needed by the robots for unloading and loading the press. This time starts at UC (assuming the unloader is ideally synchronized to the press) and terminates at DP (assuming the press reaches this point exactly when the robot has finished loading).

In Figure 2, the C1 curve represents the optimal press motion for a given robot unloading and loading time Tₙₚ. In this motion, deceleration starts at a point D, before reaching the point UC where unloading starts. From point D, the press decelerates at full torque. It passes point UC, and reaches zero speed at point Z1. Motion continues with the same full torque, which now causes the press to reverse, which in the examples in Figs 1-4 and 8 means to rotate in an anti-clockwise direction. At point R, which has been calculated so that DP will be reached at a time Tₙₚ = T3+T1+T4 after passing UC, the sign of the torque is changed. The press now slows down its reversing motion until zero speed is reached for a second time at point Z2. The press then continues with full torque until after DP when full speed is reached and into the pressing stage. Thus the press is synchronised in this way as the slave of a loader device.

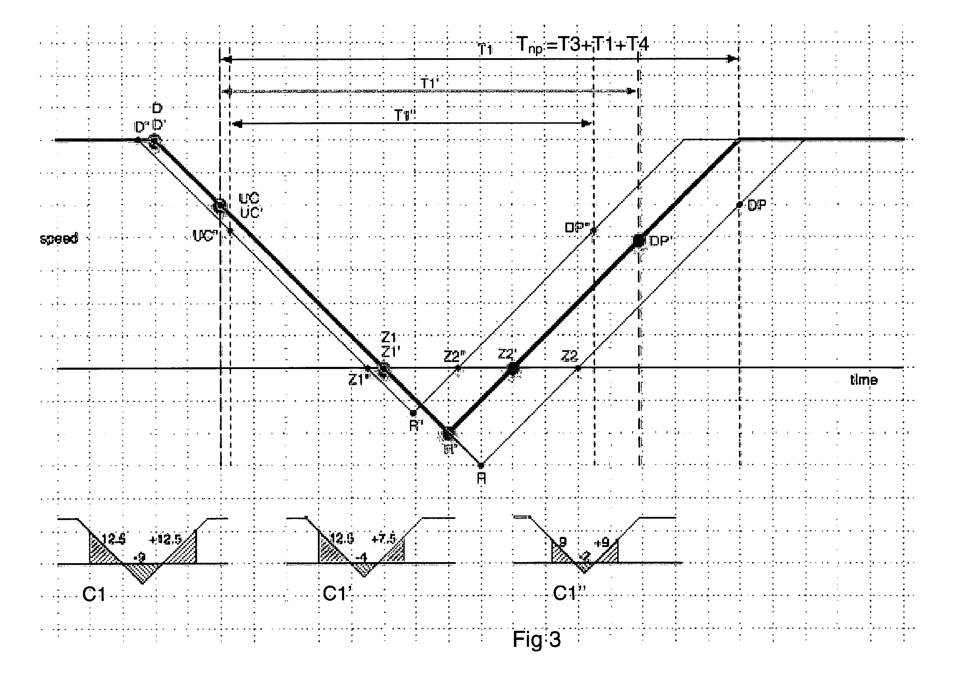

Figure 8 shows a production cycle of a press with reversing and in terms of angular rotation and the traditional press cycle positions of TDC (Top dead centre) and BDC (Bottom dead centre). Figure 8 shows the press moving in a clockwise direction past BDC and towards TDC. The press has a zero speed or crosses zero speed at Z₁. Upon reaching Z₁ in the diagram the press then reverses to a point shown R, and reverses again to a forward, clockwise, direction and crosses zero speed again at Z₂. The press continues accelerating, most often at full torque, to pass through DP at the maximum speed. This may be compared to the same events in Figures 2, 3.

Which method of synchronization to a later loader is chosen depends on the moment during the motion at which information about the lateness is obtained. (See also Figure 6.) If information is obtained after passing point R', synchronization will consist of pausing the motion of the press at point Z2, as shown by the C1' curve in Figure 2. This method gives a result which is similar to the synchronization of the mechanical press - the press waits before being restarted at Z2'. The motion profile of the press as a function of the position of the press is not affected by this method.

If information about the lateness of the loader is available earlier in the cycle, i.e after passing point D but before passing point R, synchronization is advantageously obtained by changing position of point R. By reversing over a greater angle, as illustrated by the C1" curve in Figure 2, not only is a longer Tₙₚ = T3+T1+T4 time obtained, but the speed at DP" is also increased. This results in a decrease in cycle time compared to the case where the press would have waited at Z2 to obtain the same Tₙₚ.

If information about the lateness of the loader is available still earlier in the cycle, i.e. before passing point D, synchronization is advantageously obtained by changing point D where deceleration is started. By starting deceleration later, and at the same time adapting point R, a shorter cycle time for a given Tₙₚ is obtained than by changing point R alone. This is due to the fact that when deceleration is started later, high speed is maintained for a longer time, and a higher speed is reached at DP.

Figure 7 shows the general adaptation deceleration/acceleration. Figure 5 shows the adaptation of deceleration/acceleration of the press depending on at which point in time information about a late unloader is known. Thus as shown in Figure 5 the following steps may be carried out:
60 find out before D
61 unloader robot will be late to D,
   then 62 set D later
60 find out before D
64 unloader robot will be on time
50a Decelerate drive motor from D at max torque, and
52 Set motor torque to reverse at full torque and pass through zero speed Z₁;
65 find out after D before R that
66 loader robot will be late to DP
   then 67 reverse over a greater angle to R
54 set motor to change torque sign at R and accelerate forward at full torque and pass through zero speed again Z₂,
68 find out after R that loader robot will be late to DP
   then 70 pause at point Z₂ and then
56 accelerate drive motor to max speed or W1 so that the press is at maximum speed when it reaches DP.

Similarly Figure 6 summarises the adaptation of deceleration/acceleration of the press depending on at which point in time information about an early loader becomes known. Thus as shown in Figure 6 the following steps may be carried out:
71 find out well before D that
72 loader robot will arrive early at D
   then 62 set D earlier, and
50a decelerate drive motor from point D at maximum torque,
52 set motor to reverse at full torque and pass through zero speed Z₁
74 find out after D and before R that loader robot will arrive early at DP
   then 76 reverse to R over a lesser angle,
54 set motor to change torque sign at R and accelerate forward at full torque and pass through zero speed again Z₂,
56 accelerate drive motor to max speed or W1 so that the press reaches DP at maximum speed.

The application of these methods is limited by the angle of press motion that is available for reversing. Should the press reverse too much this may, for example, cause a collision between the press and the unloader and/or loader near point Z2. Similarly if, for example, deceleration is started too late, there is a risk that near point Z1 the press closes so much that a collision occurs.

Figure 3 gives an example of how the different points D, Z1, R, Z2 and DP may be located for a case where the press reverses only over a small angle (see also Figure 3 below).

Synchronization to an early loader is done with similar methods, as illustrated in Figure 4. However, if information about an early loader is obtained only after passing point R, there is no possibility for the press to adapt its motion since after this point it is already accelerating at full torque. If information about the earliness of the loader is known after the start of deceleration but before point R, synchronization is obtained by moving point R closer to point Z1, as shown by the C1' curve in Figure 3. Unfortunately, as this curve shows, DP is passed at a lower speed, but the cycle time lost in longer acceleration after DP is more than compensated by a gain in cycle time since DP is reached much earlier.

If information about the earliness of the loader is known before the start of deceleration, synchronization is obtained by starting deceleration earlier, as shown by the C1'' curve. Again, this earlier deceleration will result in a deterioration of the press time (UC'' and DP'' are passed at a lower speed), which is more than compensated by the gain in Tₙₚ, as DP is reached much earlier. This method gives a slightly improved cycle time compared to the case where information about the earliness was know after the start of deceleration.

From the above it is clear that for optimal synchronization, a reliable prediction of the robot motion is essential. The inventers recommend that the robot controller is used to calculate a prediction (estimate) for the time instant when the press should reach DP position, and update this estimate during the robot motion. The described method for predicting the time instant when the press should reach DP position comprises two parts, as previously mentioned. Since it is important for the control of the press to know the required time instant already before the start of deceleration at the end of the press cycle, it is not possible to rely on a real-time estimate or prediction of the robot motion alone. In fact, the motion of the loader robot is most likely not exactly known this early in the cycle, since the loader robot early in the cycle may still be working as unloader robot for another press or is being synchronized to the unloader robot of this press. That is to say that for part of the cycle the loader robot is synchronised as a slave to the unloader robot. However, motion of this robot will typically be the same in every cycle. It is therefore proposed to calculate an estimate, a prediction, based on the motion of the loader robot during a finite or infinite number of previous press cycles, and use this estimate to determine the starting point for deceleration of the press, and possibly also point R of the press motion. Once the loader robot is no longer synchronized to the unloader robot, it may be able to provide an accurate estimate of its own motion. At this moment the loader robot controller can provide an accurate target time update for the estimated time at which the press will reach DP during the present cycle. This target time may then replace the target time calculated based on previous cycles.

Instead of robots for loading and unloading the press, other types of loading/unloading equipment may also be used, such as transfer mechanisms specifically designed for this task. In another embodiment, the calculations for the prediction of when a loader/unloader will reach a certain point may be carried out in a control device or control unit other than a robot controller.

The described method for synchronizing a bi-directional motion of the press to the motion of something else (another device) can be applied to the motion of an (unloader) robot as well. For unloading the press as fast as possible, it is important for the unloader to enter the press not only at the exact moment when the press crosses the UC position, but to do this at as high speed as possible. By introducing "alternative bi-directional" motion for the unloader robot, and synchronizing this motion to the press, unloading will be faster than with todays synchronization method. In this specification, the words "alternative bi-directional motion" is used to mean: instead of stopping a motion in the middle between two points to wait for synchronization, allow deceleration over a longer distance, then move backwards over a certain distance, and finally reaccelerate from an earlier position.

For cases where not enough time is available for alternative bi-directional motion, or reversing for some reason is not allowed or possible, the proposed methods can also be adapted for unidirectional motion. This has been illustrated in Figure 4. For short unloading/loading times, the motion becomes continuous, i.e. there is no point where zero speed is reached. Figure 4 shows the synchronisation points on the speed profiles on a press cycle in which reversing does not occur, but in which a variable waiting time may occur.

The described methods are not limited to the case where maximum motor torque is a constant. The torque used in deceleration and acceleration is advantageously equal to the maximum torque which the drive can supply, but this maximum may be a function of motor speed, of motor temperature, available voltage, converter temperature, limitations imposed by gears, other mechanical constraints, etc. The described synchronization method is not limited to a press with an eccentric mechanism. It can be used on pressed with a so-called link-drive mechanism as well, without modification. With some modifications, the method can be used on a press using a ball-screw mechanism (typically using bi-directional operation). With similar modifications, the method can be used on a direct (i.e. not hybrid) servo press using bi-directional operation or also alternative bi-directional operation.

The proposed method for predicting robot motion can also be used for predicting press motion. Since press motion depends on many parameters (masses of different parts of the mechanism, adjustment of pressure in counter-balance cylinders, mass of the upper die, etc), which are difficult to take into account in a press controller, it is proposed to analyse on-line the motion of the press for given settings (such as pressing speed, position D where deceleration is started, position R where torque is reversed, max press speed). Based on the motion obtained during a finite or infinite number of previous press cycles, the above mentioned settings can be adapted such that an optimal cycle time and required time instant for passing DP is obtained.

Figure 8 shows a schematic diagram for a press cycle according to an improved method for operating a mechanical press according to an embodiment of the invention. The figure shows, in this case for rotation in a clockwise direction, the press approaching the deceleration point D at point 8 just before the UC point. Deceleration begins and the press rotates through UC, when the unloader/loader enters the press to unload the part. The press continues to decelerate at maximum torque and passes through zero speed at Z₁ and is then reversed over a small angle from Z₁ to R'. At point R' the press is accelerated at full torque in the forward, clockwise direction again, and passes through zero for a second time at Z₂' accelerating from Z₂' toward DP so as to pass DP at the greatest possible speed towards point 1. By the time the press reaches DP the loader/unloader robot that has been loading a new part must be out of the press. In the pressing stage, in a traditional mechanical press with a flywheel, the working part of pressing usually occurs at or during the time the press arrives at the BDC position. At this time, the speed of a traditional press tends to drop as energy is transferred into the workpiece. However in a hybrid servo or direct servo press according to an embodiment of the invention, the hybrid or direct servo motor may be re-accelerated at any selected time after impact which may be before BDC is reached, eg at the point dp in Figure 8.

Electrical power consumption of the drive motor of a press may be improved or smoothed by use of regenerative braking. The second motor in particular may be decelerated to a reduced speed or to a zero speed by means in part of regenerative braking. For example a speed reduction from W1 to Wp during the pressing stage, and a speed reduction at after UC in the non-pressing stage from W1 to zero. A system carrying out methods according to an embodiment of the invention may comprise energy recovery means for recovering energy from the first or second motor of the press or first machine during deceleration or braking. This may be any recovery means such as for example electrical, mechanical or chemical. This may involve use of one or more capacitors, batteries, mechanical device such as flywheels, mechanical springs or devices comprising a reservoir of a compressible fluid. For example energy recovered from the second motor may be stored in the flywheel driven by the first drive motor. The stored energy is principally reused during one or more of the following periods of the press cycle: initial acceleration at start of the press cycle; pressing; reacceleration after pressing; acceleration while reversing; reacceleration of the flywheel after pressing.

In a similar way electrical power consumption of the drive motor of a direct servo press may be improved (or smoothed) by use of regenerative braking. The amount of energy to be regenerated (and/or smoothed) would be grater than for a hybrid servo machine of a similar press tonnage). The servo motor in particular may be decelerated to a reduced speed or to a zero speed by means in part of regenerative braking. For example a speed reduction from W1 to Wp during the pressing stage, and a speed reduction in the non-pressing stage from W1 to zero. A system carrying out methods according to an embodiment of the invention may comprise energy recovery means, such as any of the above examples in the previous paragraph for a hybrid press, for recovering energy from the servo motor of the press or first machine during deceleration or braking.

In other embodiments:
- loader control will typically have synchronization also with the unloader of the previous press in the line (not shown in figures). Unloader control will typically give synchronization signals to the loader of the next press in the line;
- while the figure shows a motor control using a position sensor on the motor, this sensor might be replaced by a position estimation algorithm (sensorless control);
- while typically a rotational sensor is used for the position of the eccentric wheel, alternatively a linear sensor giving the die position can be used;
- press control may be integrated with motor control, possibly in a single processor (as a part of the drive unit consisting of press control, motor control and converter);
- press control may be integrated with unload control or loader control, equivalent to the control of an external axis in a robot controller;
- there may be a higher-level control that controls a complete press line or part of it. Communication between the controls shown may go through the higher-level control or through a bus;
- the unloader of one press may be the same physical unit as the loader of the next press. In that case the unloader control for one press may be the same hardware as the loader control of the next press. I.e. the proposed method can be applied regardless whether unloading and loading is performed by a single robot, two separate robots, or an even larger number of robots. Instead of standard robots, also dedicated loading/unloading apparatus can be used.

One or more microprocessors (or processors or computers) comprise a central processing unit CPU performing the steps of the methods according to one or more aspects of the invention, as described for example with reference to the flowchart of Figure 7 or the flow schemes of Figures 5 and 6. The method or methods are performed with the aid of one or more computer programs, which are stored at least in part in memory or in a computer readable storage device accessible by the one or more processors. It is to be understood that the computer programs for carrying out methods according to the invention may also be run on one or more general purpose industrial microprocessors or computers instead of one or more specially adapted computers or processors.

The computer program comprises computer program code elements or software code portions that make the computer or processor perform the methods using equations, algorithms, data, stored values, calculations and the like for the methods previously described, for example in relation to Figures 5-7 and in relation to the speed profile of Figs 2-4 and to the methods described in relation to Figs 5-6. The computer program may include one or more small executable programs. A part of the program may be stored in a processor as above, but also in a ROM, RAM, PROM, EPROM or EEPROM chip or similar memory means. The or some of the programs in part or in whole may also be stored locally (or centrally) on, or in, other suitable computer readable medium such as a magnetic disk, CD-ROM or DVD disk, hard disk, magneto-optical memory storage means, in volatile memory, in flash memory, as firmware, including removable memory media, or stored on a data server. The program may also in part be supplied from a data network, including a public network such as the Internet. The computer programs described may also be arranged in part as a distributed application capable of running on several different computers or computer systems at more or less the same time.

## Claims

1. A method for operating a first machine of a manufacturing process section arranged to carry out a production cycle, said production cycle comprising a pressing part and a non-pressing part, which said first machine is operated in conjunction with at least one second machine and which said first machine carries out a process during the working part of the cycle on a workpiece which is loaded into and/or unloaded out of said first machine by said at least one second machine during the non-working part of each process cycle, **characterised by** adaptively controlling the speed (W) of said first machine to decelerate said first machine at a point (D) before the start point (UC) after which unloading is permitted dependent on a speed or position of said second machine and synchronising said first machine to said second machine by controlling the speed of said first machine and accelerating or decelerating it according to an estimated time for said second machine to reach the start point (UC) or end point (DP) of an unloading or loading stage of the process cycle.

2. A method according to claim 1, **characterised by** synchronising the speed of said first machine to said second machine by controlling the speed of said first machine and by:
- decelerating said first machine at a start point (D) before an estimated time at which said first machine shall reach the beginning of the unloading point stage (UC) towards zero speed (Z₁) and
- accelerating said first machine to reach the end point of the loading stage (DP) at the highest possible speed (W1).

3. A method according to claim 1, **characterised by** reversing said first machine after reaching a zero speed (Z*₁*) and subsequently accelerating in a forward direction so that said first machine is running at the highest possible speed (W1) when it reaches the end point of the loading stage (DP).

4. A method according any previous claim, **characterised by** upon detecting that the loading stage is being delayed, before the deceleration time (D) has begun before beginning of unloading (UC), by subsequently changing from positive torque to negative torque and accelerating said first machine in a forward direction from an increased reverse angle or after the deceleration has begun and before said first machine has changed from negative to positive torque to move in the forward direction (R), by instead continuing on negative torque and reversing over a greater angle and changing to positive torque at a later point in time than planned, and accelerating subsequently in the forward direction so that said first machine reaches the end of the loading stage (DP) in the shortest possible time (T1).

5. A method according to claim 3, **characterised by** upon detecting, after changing direction to the forward direction (R), that the loading stage shall be delayed, by holding said first machine at zero speed for a period of time (Z₂-Z₁) before changing to positive torque and accelerating in the forward direction to full forward speed (W1).

6. A method according to claim 3, **characterised by** upon detecting before the deceleration time (D) before unloading (UC) begins that the loading stage shall be delayed, by delaying the change in torque and start of deceleration to a later time (D'') and by reversing over a wider angle and changing from negative to positive torque at a later point in time (R''') than planned or, upon detecting that the loading stage may begin early at a time after the deceleration has begun (D) and before said first machine has changed to the forward direction (R), by reversing over a narrower angle and changing from negative torque to positive torque at a still earlier point in time (R') than planned before driving the first machine in the forward direction.

7. A method according any previous claim, **characterised by** reversing said first machine after reaching a zero speed (Z*₁*) and upon detecting before the deceleration time (D) before unloading (UC) begins that the loading stage shall be delayed, by subsequently changing from negative torque to positive torque at a later point in time (R', R'') and thus accelerating said first machine in a forward direction so that the first machine reaches the end of the loading stage (DP) in the shortest possible time (T1', T1'').

8. A method according to claim 1, **characterised by**
- estimating a time at which said second machine shall reach the beginning of the unloading point stage (UC),
- calculating from the estimate a time at which said first machine shall reach the end point of the loading stage (DP).

9. A method according to claim 1, **characterised by** calculating a point (R) at which drive torque is changed from maximum negative to maximum positive such that the end point of the loading stage (DP) is reached at a desired time instant with as high speed as possible.

10. A method according to claim 1, **characterised by** that data describing the motion of said second machine collected during a finite or infinite number of previous cycles is used in addition, to calculate the desired time instant.

11. A method according to claim 1 or 6, **characterised by** operating said first machine and optimising the speed of said first machine such that said first machine obtains the highest possible speed at the beginning of unloading (UC) of the non-pressing part of the process cycle, while at the same time minimizing the time difference (T4) between exit of the second machine from the first machine and the end point of the loading stage (DP).

12. A method according to claim 1 or 6, **characterised by** operating said first machine and optimising the speed of said first machine such that said first machine obtains the highest possible speed at the beginning of unloading (UC) of the non-pressing part of the process cycle, while at the same time reaching a maximum speed at the end point of the loading stage.

13. A method according to claim 1, **characterised by** either of said first machine or said at least one second machine may be reversed during the loading/unloading part of the cycle.

14. A method according to claim 1, **characterised by** recovering energy from the first machine and storing it in an energy recovery means and smoothing electrical power consumption of the first machine.

15. A system comprising a manufacturing process section and a first machine of the manufacturing process section, arranged to carry out a production cycle comprising a working part and a non-working part, which said first machine is operated in conjunction with at least one second machine and which said first machine carries out a process during the working part of the cycle on a workpiece which is loaded into and/or unloaded out of said first machine by said at least one second machine during the non-working part of each process cycle, **characterised by** said system further comprising at least one control device arranged for adaptively controlling said first machine to decelerate said first machine from a point (D) before the start point (UC) after which unloading is permitted dependent on a speed or position of said second machine by controlling the speed of said first machine and accelerating or decelerating it according to an estimated time for said second machine to reach the start point (UC) or end point (DP) of an unloading or loading stage of the process cycle thereby synchronising said first machine to said second machine by controlling the speed (W) of said first machine.

16. A system according to claim 15, wherein at least one control device comprises hardware and/or software for estimating a time at which said second machine shall arrive at the beginning of the unloading point stage (UC) to unload said first machine.

17. A system according to claim 15, wherein said at least one control device comprises apparatus for estimating a time at which said second machine will arrive at the end point of the loading stage (DP).

18. A system according to claim 15, wherein at least one said first machine is a mechanical press comprising at least one electric drive motor, a drive control means for controlling the motor, a ram, a flywheel, a clutch and a member for translating rotational motion of said flywheel in a first rotation direction into a linear motion of said ram arranged to be lowered and raised along a linear path for operating said press to carry out a press production cycle including a pressing part and one or more non-pressing parts of said cycle.

19. A system according to claim 18 wherein the mechanical press comprises a second drive motor or actuator arranged connected to said ram and by providing a control output to a drive control means of said second drive motor such that the speed of said second drive motor is varied during at least one part of a said press production cycle.

20. A system according to claim 15 or 17, wherein said second machine is a transfer device or a robot loader and/or unloader loading the workpiece into and/or out of the first machine during the loading/unloading part of the process cycle.

21. A system according to claim 15, wherein either of said first machine or said at least one second machine may be reversed during the loading and/or unloading part of the cycle.

22. A system according to claim 18 wherein the at least one control device comprises one or more computer programs for controlling the speed or torque of at least one drive motor of the mechanical press.

23. A system according to claim 18 **characterized in that** it comprises energy recovery means for recovering energy from the first or second motor of the press or first machine.

24. A computer readable medium comprising computer code means and/or software code portions for making a computer or processor perform a method according to any of claims 1-14 recorded on it.

25. Use of a system according to claims 15-23 for carrying out a setup or production set operation for any from the list of:
stamping, hot stamping, pressing, deep drawing, cutting, punching.

## Patentansprüche

1. Verfahren zum Betreiben einer ersten Maschine eines Herstellungsprozessabschnitts, die dafür ausgelegt ist, einen Produktionszyklus durchzuführen, wobei der Produktionszyklus ein pressendes Teil und ein nicht pressendes Teil umfasst, wobei die erste Maschine in Verbindung mit mindestens einer zweiten Maschine betrieben wird und die erste Maschine während des Arbeitsabschnitts des Zyklus einen Prozess an einem Werkstück durchführt, das, während des Arbeitsabschnitts jedes Prozesszyklus durch die mindestens eine zweite Maschine auf die erste Maschine geladen wird und/oder von der ersten Maschine entladen wird, **gekennzeichnet durch** ein adaptives Steuern der Geschwindigkeit (W) der ersten Maschine, um die erste Maschine zu einem Zeitpunkt (D) vor dem Startzeitpunkt (UC) zu verzögern, nach dem das Entladen abhängig von einer Geschwindigkeit oder einer Position der zweiten Maschine zulässig ist, und Synchronisieren der ersten Maschine mit der zweiten Maschine **durch** das Steuern der Geschwindigkeit der ersten Maschine und Beschleunigen oder Verzögern dieser entsprechend einem geschätzten Zeitpunkt, zu dem die zweite Maschine den Startzeitpunkt (UC) oder den Endzeitpunkt (DP) eines Entlade- oder Beladeschrittes des Prozesszyklus erreicht.

2. Verfahren nach Anspruch 1, **gekennzeichnet durch** das Synchronisieren der Geschwindigkeit der ersten Maschine mit der zweiten Maschine **durch** das Steuern der Geschwindigkeit der ersten Maschine und **durch**:
das Verzögern der ersten Maschine an einem Startzeitpunkt (D) vor einem geschätzten Zeitpunkt, zu dem die erste Maschine den Anfang des Entladestelleschritts (UC) mit annähernd Nullgeschwindigkeit (Z₁) erreichen soll; und
das Beschleunigen der ersten Maschine, um den Endpunkt des Beladeschrittes (DP) mit der höchstmöglichen Geschwindigkeit (W1) zu erreichen.

3. Verfahren nach Anspruch 1, **gekennzeichnet durch** das Umkehren der ersten Maschine nach dem Erreichen einer Nullgeschwindigkeit (Z₁) und anschließend das Beschleunigen in einer Vorwärtsrichtung, so dass die erste Maschine mit der höchstmöglichen Geschwindigkeit (W1) läuft, wenn sie den Endpunkt des Ladeschritts (DP) erreicht.

4. Verfahren nach einem vorhergehenden Anspruch, **dadurch gekennzeichnet, dass** nach dem Detektieren, dass der Ladeschritt verzögert ist, bevor die Verzögerungszeit (D) begonnen hat und vor dem Beginnen des Entladens (UC), die erste Maschine anschließend von positivem Drehmoment zu negativen Drehmoment wechselt und von einem größeren umgekehrten Winkel in einer Vorwärtsrichtung beschleunigt, oder nachdem die Verzögerung begonnen hat und bevor die erste Maschine von negativem zu positivem Drehmoment gewechselt hat, um sich in Vorwärtsrichtung (R) zu bewegen, stattdessen Fortfahren bei negativem Drehmoment und Umkehren über einen größeren Winkel und Wechseln zu einem positiven Drehmoment zu einem späteren Zeitpunkt als geplant, und anschließend Beschleunigen in der Vorwärtsrichtung, so dass die erste Maschine das Ende des Beladeschrittes (DP) in der kürzest möglichen Zeit (T1) erreicht.

5. Verfahren nach Anspruch 3, **dadurch gekennzeichnet, dass** nach einem Richtungswechsel zu der Vorwärtsrichtung (R) beim Detektieren, dass der Beladeschritt verzögert werden soll, die Maschine vor dem Wechseln auf ein positives Drehmoment und vor dem Beschleunigen auf volle Vorwärtsgeschwindigkeit (W1) in die Vorwärtsrichtung für eine Zeitspanne (Z₂-Z₁) auf Nullgeschwindigkeit gehalten wird.

6. Verfahren nach Anspruch 3, **dadurch gekennzeichnet, dass** beim Detektieren bevor die Verzögerungszeit (D) vor dem Entladen (UC) beginnt, der Beladeschritt verzögert werden soll, der Drehmomentwechsel und der Start der Verzögerung zu einem späteren Zeitpunkt (D'') als geplant verzögert werden und über einen breiteren Winkel umgekehrt werden und zu einem späteren Zeitpunkt (R''') als geplant von dem negativen zu dem positiven Drehmoment gewechselt werden, oder dass beim Detektieren zu einem Zeitpunkt, nachdem die Verzögerung begonnen hat (D) und bevor die erste Maschine auf die Vorwärtsrichtung (R) gewechselt hat, der Beladeschritt früh beginnen darf, über einen kleineren Winkel umgekehrt werden und zu einem noch früheren Zeitpunkt (R') als geplant von dem negativen Drehmoment zu dem positiven Drehmoment gewechselt werden, bevor die erste Maschine in der Vorwärtsrichtung angetrieben wird.

7. Verfahren nach einem vorhergehenden Anspruch, **gekennzeichnet durch** das Umkehren der ersten Maschine nach dem Erreichen einer Nullgeschwindigkeit (Z₁) und beim Detektieren bevor die Verzögerungszeit (D) vor dem Entladen (UC) beginnt, dass der Beladeschritt verzögert werden soll, die erste Maschine anschließend zu einem späteren Zeitpunkt (R', R'') von positivem Drehmoment zu negativem Drehmoment wechselt und somit die erste Maschine in Vorwärtsrichtung beschleunigt, so dass die erste Maschine das Ende des Beladeschrittes (DP) in der kürzest möglichen Zeit (T1', T1'') erreicht.

8. Verfahren nach Anspruch 1, **gekennzeichnet durch**:
Schätzen eines Zeitpunkts, zu dem die zweite Maschine den Beginn des Entladeschritts (UC) erreichen soll,
Berechnen eines Zeitpunkts aus dem geschätzten Zeitpunkt, zu dem die erste Maschine den Endpunkt des Beladeschrittes (DP) erreichen soll.

9. Verfahren nach Anspruch 1, **gekennzeichnet durch** das Berechnen eines Zeitpunktes (R), zu dem das Antriebsdrehmoment von maximal negativ auf maximal positiv gewechselt wird, so dass der Endpunkt des Beladeschrittes (DP) zu einem gewünschten Zeitpunkt mit höchstmöglicher Geschwindigkeit erreicht wird.

10. Verfahren nach Anspruch 1, **dadurch gekennzeichnet, dass** Daten, die die Bewegung der zweiten Maschine beschreiben und die während einer begrenzten oder unbegrenzten Anzahl von vorhergehenden Zyklen gesammelt wurden, zusätzlich verwendet werden, um den gewünschten Zeitpunkt zu berechnen.

11. Verfahren nach Anspruch 1 oder 6, **gekennzeichnet durch** das Bedienen der ersten Maschine und das Optimieren der Geschwindigkeit der ersten Maschine, so dass die erste Maschine zu Beginn des Entladens (UC) des nicht pressenden Teils des Prozesszyklus die höchstmögliche Geschwindigkeit erreicht, und gleichzeitig die Zeitdifferenz (T4) zwischen dem Austreten der zweiten Maschine aus der ersten Maschine und dem Endpunkt des Beladeschrittes (DP) minimiert.

12. Verfahren nach Anspruch 1 oder 6, **gekennzeichnet durch** das Bedienen der ersten Maschine und das Optimieren der Geschwindigkeit der ersten Maschine, so dass die erste Maschine zu Beginn des Entladens (UC) des nicht pressenden Teils des Prozesszyklus die höchstmögliche Geschwindigkeit erreicht, und gleichzeitig an dem Endpunkt des Beladeschrittes eine maximale Geschwindigkeit erreicht.

13. Verfahren nach Anspruch 1, **dadurch gekennzeichnet, dass** entweder die erste Maschine oder die mindestens eine zweite Maschine während des Belade- bzw. Entladeschritts des Zyklus umgekehrt werden darf.

14. Verfahren nach Anspruch 1, **gekennzeichnet durch** das Rückgewinnen von Energie von der ersten Maschine und Speichern dieser in Energierückgewinnungsmitteln und Glätten des elektrischen Leistungsverbrauchs der ersten Maschine.

15. System, das einen Herstellungsprozessabschnitt und eine erste Maschine des Herstellungsprozessabschnitts umfasst, die dafür ausgelegt ist, einen Produktionszyklus durchzuführen, wobei der Produktionszyklus einen Arbeitsabschnitt und einen Nichtarbeitsabschnitt umfasst, wobei die erste Maschine in Verbindung mit mindestens einer zweiten Maschine betrieben wird und wobei die erste Maschine während des Arbeitsabschnitts des Zyklus einen Prozess an einem Werkstück durchführt, das während des Nichtarbeitsabschnitts jedes Prozesszyklus durch die mindestens eine zweite Maschine auf die erste Maschine geladen wird und/oder von der ersten Maschine entladen wird, **dadurch gekennzeichnet, dass** das System ferner mindestens eine Steuerungsvorrichtung umfasst, die für ein adaptives Steuern der ersten Maschine ausgelegt ist, um die erste Maschine ab einem Zeitpunkt (D) vor dem Startzeitpunkt (UC) zu verzögern, nach dem das Entladen abhängig von einer Geschwindigkeit oder einer Position der zweiten Maschine zulässig ist, durch Steuern der Geschwindigkeit der ersten Maschine und Beschleunigen oder Verzögern dieser entsprechend einer geschätzten Zeitspanne, die die zweite Maschine benötigt, um den Startzeitpunkt (UC) oder den Endzeitpunkt (DP) eines Entlade- oder Beladeschrittes des Prozesszyklus zu erreichen, und dabei Synchronisieren der ersten Maschine mit der zweiten Maschine durch das Steuern der Geschwindigkeit (W) der ersten Maschine.

16. System nach Anspruch 15, wobei mindestens eine Steuerungsvorrichtung Hardware und/oder Software zur Abschätzung eines Zeitpunkts umfasst, zu dem die zweite Maschine den Beginn des Entladeschritts (UC) erreichen soll, um die erste Maschine zu entladen.

17. System nach Anspruch 15, wobei die mindestens eine Steuervorrichtung ein Gerät zum Abschätzen eines Zeitpunkts umfasst, zu dem die zweite Maschine den Endzeitpunkt des Beladeschrittes (DP) erreicht.

18. System nach Anspruch 15, wobei die mindestens eine erste Maschine eine mechanische Presse ist, die mindestens einen elektrischen Antriebsmotor, Antriebssteuerungsmittel zum Steuern des Motors, einen Stempel, ein Schwungrad, einen Greifer und ein Element zum Überführen einer Drehbewegung des Schwungrades in einer ersten Drehrichtung in eine Linearbewegung des Stempels, der dafür ausgelegt ist, zum Durchführen eines Pressenproduktionszyklus, der einen pressenden Teil und einen oder mehrere nicht pressende Teile des Zyklus enthält, entlang eines geradlinigen Weges abgesenkt und angehoben zu werden.

19. System nach Anspruch 18, wobei die mechanische Presse einen zweiten Antriebsmotor oder Aktor umfasst, der mit dem Stempel verbunden angeordnet ist, und eine Steuerungsausgabe für die Antriebssteuerungsmittel des zweiten Antriebsmotors bereitstellt, so dass die Geschwindigkeit des zweiten Antriebsmotors während mindestens einen Teils eines Pressenproduktionszyklus variiert wird.

20. System nach Anspruch 15 oder 17, wobei die zweite Maschine einer Übertragungsvorrichtung oder einem Roboterbelader und/oder -entlader entspricht, der das Werkstück während des Belade- bzw. Entladeteils des Prozesszyklus in die erste Maschine lädt bzw. es aus der ersten Maschine entlädt.

21. System nach Anspruch 15, wobei entweder die erste Maschine oder die mindestens eine zweite Maschine während des Belade- und/oder Entladeteils des Zyklus umgekehrt werden darf.

22. System nach Anspruch 18, wobei die mindestens eine Steuerungsvorrichtung ein oder mehrere Computerprogramme zum Steuern der Geschwindigkeit oder des Drehmoments mindestens eines Antriebsmotors der mechanischen Presse umfasst.

23. System nach Anspruch 18, **dadurch gekennzeichnet, dass** es Energierückgewinnungsmittel zum Rückgewinnen von Energie von dem ersten oder zweiten Motor der Presse oder ersten Maschine umfasst.

24. Computerlesbares Medium, das Computerprogrammmittel und/oder Softwarecodeabschnitte umfasst, die einen Computer oder Prozessor veranlassen, ein Verfahren nach einem der Ansprüche 1-14, das darauf aufgezeichnet ist, auszuführen.

25. Verwenden eines Systems nach den Ansprüchen 15-23 zum Ausführen eines Einrichte- oder Produktionsvorbereitungsbetriebs zum Prägen, Heißprägen, Pressen, Tiefziehen, Schneiden oder Stanzen.

## Revendications

1. Procédé d'exploitation d'une première machine d'une section de processus de fabrication agencée pour réaliser un cycle de production, ledit cycle de production comportant une partie de matriçage et une partie hors matriçage, ladite première machine étant exploitée en conjonction avec au moins une deuxième machine et ladite première machine réalisant un processus pendant la partie opératoire du cycle sur une pièce qui est chargée dans et/ou déchargée de ladite première machine par ladite ou lesdites deuxièmes machines pendant la partie non opératoire de chaque cycle de processus, **caractérisé par** une commande adaptative de la vitesse (W) de ladite première machine pour décélérer ladite première machine à un point (D) précédant le point de départ (UC) après lequel le déchargement est autorisé en fonction d'une vitesse ou d'une position de ladite deuxième machine et synchroniser ladite première machine avec ladite deuxième machine en régulant la vitesse de ladite première machine et en l'accélérant ou en la décélérant selon un temps estimé nécessaire à ladite deuxième machine pour atteindre le point de départ (UC) ou le point final (DP) d'une phase de déchargement ou de chargement du cycle de processus.

2. Procédé selon la revendication 1, **caractérisé par** la synchronisation de la vitesse de ladite première machine sur ladite deuxième machine en régulant la vitesse de ladite première machine et en :
- décélérant ladite première machine à un point de départ (D) avant un temps estimé auquel ladite première machine doit atteindre le début de la phase du point de déchargement (UC) vers une vitesse nulle (Z₁) et
- accélérant ladite première machine pour atteindre le point final de la phase de chargement (DP) à la plus grande vitesse possible (W1).

3. Procédé selon la revendication 1, **caractérisé par** les étapes consistant à faire reculer ladite première machine après avoir atteint une vitesse nulle (Z₁) et à accélérer ensuite dans un sens avant de telle sorte que ladite première machine avance à la plus grande vitesse possible (W1) lorsqu'elle atteint le point final de la phase de chargement (DP).

4. Procédé selon l'une quelconque des revendications précédentes, **caractérisé par** les étapes consistant, lorsqu'il est détecté que la phase de chargement est retardée, avant que le temps de décélération (D) n'ait commencé avant le début du déchargement (UC), à passer ensuite d'un couple positif à un couple négatif et à accélérer ladite première machine dans un sens avant en partant d'un angle de recul accru ou après que la décélération a commencé et avant que ladite première machine ne soit passée d'un couple négatif à un couple positif pour se déplacer dans le sens avant (R), en continuant au lieu de cela sur le couple négatif et en reculant sur un plus grand angle et en passant au couple positif à un instant plus tardif que prévu, et à accélérer ensuite dans le sens avant de telle sorte que ladite première machine atteigne la fin de la phase de chargement (DP) dans le temps le plus court possible (T1).

5. Procédé selon la revendication 3, **caractérisé par** l'étape consistant, lorsqu'il est détecté, après avoir changé de sens pour passer au sens avant (R), que la phase de chargement doit être retardée, à maintenir ladite première machine à vitesse nulle pendant un laps de temps (Z₂-Z₁) avant de passer au couple positif et d'accélérer dans le sens avant jusqu'à la pleine vitesse avant (W1).

6. Procédé selon la revendication 3, **caractérisé par** les étapes consistant, lorsqu'il est détecté, avant que le temps de décélération (D) précédant le déchargement (UC) ne commence, que la phase de chargement doit être retardée, à retarder le changement de couple et le début de la décélération jusqu'à un instant ultérieur (D'') et à reculer sur un angle plus large et à passer d'un couple négatif à un couple positif à un instant plus tardif (R''') que prévu ou, lorsqu'il est détecté que la phase de chargement peut commencer de façon anticipée à un instant postérieur au début de la décélération (D) et antérieur au passage de ladite première machine au sens avant (R), à reculer sur un angle plus étroit et à passer du couple négatif au couple positif à un instant encore plus précoce (R') que prévu avant d'entraîner la première machine dans le sens avant.

7. Procédé selon l'une quelconque des revendications précédentes, **caractérisé par** les étapes consistant à faire reculer ladite première machine après avoir atteint une vitesse nulle (Z₁) et, lorsqu'il est détecté, avant que le temps de décélération (D) précédant le déchargement (UC) ne commence, que la phase de chargement doit être retardée, en passant ensuite du couple négatif au couple positif à un instant plus tardif (R', R'') et en accélérant ainsi ladite première machine dans un sens avant de telle sorte que la première machine atteigne la fin de la phase de chargement (DP) dans le temps le plus court possible (T1' , T1'').

8. Procédé selon la revendication 1, **caractérisé par** les étapes consistant à
- estimer un instant auquel ladite deuxième machine doit atteindre le début de la phase du point de déchargement (UC),
- calculer, à partir de l'estimation, un instant auquel ladite première machine doit atteindre le point final de la phase de chargement (DP).

9. Procédé selon la revendication 1, **caractérisé par** l'étape consistant à calculer un point (R) où le couple d'entraînement passe de négatif maximal à positif maximal de telle façon que le point final de la phase de chargement (DP) soit atteint à un instant souhaité avec la plus grande vitesse possible.

10. Procédé selon la revendication 1, **caractérisé en ce que** des données décrivant le mouvement de ladite deuxième machine, recueillies pendant un nombre fini ou infini de cycles antérieurs, sont utilisées en outre, pour calculer l'instant souhaité.

11. Procédé selon la revendication 1 ou 6, **caractérisé par** les étapes consistant à exploiter ladite première machine et à optimiser la vitesse de ladite première machine de telle façon que ladite première machine acquière la plus grande vitesse possible au début du déchargement (UC) de la partie hors matriçage du cycle de processus, tout en minimisant en même temps l'écart de temps (T4) entre la sortie de la deuxième machine de la première machine et le point final de la phase de chargement (DP).

12. Procédé selon la revendication 1 ou 6, **caractérisé par** les étapes consistant à exploiter ladite première machine et à optimiser la vitesse de ladite première machine de telle façon que ladite première machine acquière la plus grande vitesse possible au début du déchargement (UC) de la partie hors matriçage du cycle de processus, tout en atteignant en même temps une vitesse maximale au point final de la phase de chargement.

13. Procédé selon la revendication 1, **caractérisé en ce que** l'une ou l'autre de ladite première machine et de ladite ou desdites deuxièmes machines peut reculer pendant la partie de chargement/déchargement du cycle.

14. Procédé selon la revendication 1, **caractérisé par** les étapes consistant à récupérer de l'énergie à partir de la première machine et à la stocker dans un moyen de récupération d'énergie et à lisser la consommation de puissance électrique de la première machine.

15. Système comportant une section de processus de fabrication et une première machine de la section de processus de fabrication, agencée pour réaliser un cycle de production comportant une partie opératoire et un partie non opératoire, ladite première machine étant exploitée en conjonction avec au moins une deuxième machine et ladite première machine réalisant un processus pendant la partie opératoire du cycle sur une pièce qui est chargée dans et/ou déchargée de ladite première machine par ladite ou lesdites deuxièmes machines pendant la partie non opératoire de chaque cycle de processus, **caractérisé en ce que** ledit système comporte en outre au moins un dispositif de commande agencé pour commander de façon adaptative ladite première machine de façon à décélérer ladite première machine à partir d'un point (D) précédant le point de départ (UC) après lequel le déchargement est autorisé en fonction d'une vitesse ou d'une position de ladite deuxième machine en régulant la vitesse de ladite première machine et en l'accélérant ou en la décélérant selon un temps estimé nécessaire à ladite deuxième machine pour atteindre le point de départ (UC) ou le point final (DP) d'une phase de déchargement ou de chargement du cycle de processus, synchronisant ainsi ladite première machine avec ladite deuxième machine en régulant la vitesse (W) de ladite première machine.

16. Système selon la revendication 15, au moins un dispositif de commande comportant un matériel et/ou un logiciel servant à estimer un instant auquel ladite deuxième machine doit arriver au début de la phase du point de déchargement (UC) pour décharger ladite première machine.

17. Système selon la revendication 15, ledit ou lesdits dispositifs de commande comportant un appareil servant à estimer un instant auquel ladite deuxième machine arrivera au point final de la phase de chargement (DP).

18. Système selon la revendication 15, au moins une desdites premières machines étant une presse mécanique comportant au moins un moteur électrique d'entraînement, un moyen de commande d'entraînement servant à commander le moteur, un coulisseau, un volant d'inertie, un embrayage et un organe servant à convertir le mouvement de rotation dudit volant d'inertie dans un premier sens de rotation en un mouvement linéaire dudit coulisseau agencé de façon à être abaissé et relevé le long d'un parcours linéaire pour exploiter ladite presse afin de réaliser un cycle de production à la presse comprenant une partie de matriçage et une ou plusieurs parties hors matriçage dudit cycle.

19. Système selon la revendication 18, la presse mécanique comportant un deuxième moteur ou actionneur d'entraînement agencé en liaison avec ledit coulisseau et en fournissant une sortie de commande à un moyen de commande d'entraînement dudit deuxième moteur d'entraînement de façon à faire varier la vitesse dudit deuxième moteur d'entraînement pendant au moins une partie dudit cycle de production à la presse.

20. Système selon la revendication 15 ou 17, ladite deuxième machine étant un dispositif de transfert ou un chargeur et/ou déchargeur robotisé chargeant la pièce dans et/ou hors de la première machine pendant la partie de chargement/déchargement du cycle de processus.

21. Système selon la revendication 15, l'une ou l'autre de ladite première machine et de ladite ou desdites deuxièmes machines pouvant reculer pendant la partie de chargement/déchargement du cycle.

22. Système selon la revendication 18, le ou les dispositifs de commande comportant un ou plusieurs programmes informatiques servant à réguler la vitesse ou le couple d'au moins un moteur d'entraînement de la presse mécanique.

23. Système selon la revendication 18 **caractérisé en ce qu'**il comporte un moyen de récupération d'énergie servant à récupérer de l'énergie à partir du premier ou deuxième moteur de la presse ou de la première machine.

24. Support lisible par ordinateur sur lequel sont enregistrés des moyens de code informatique et/ou des portions de code logiciel servant à faire en sorte qu'un ordinateur ou un processeur réalise un procédé selon l'une quelconque des revendications 1 à 14.

25. Utilisation d'un système selon les revendications 15 à 23 pour réaliser une configuration ou l'exploitation d'un ensemble de production pour un processus quelconque parmi la liste constituée de :
estampage, estampage à chaud, matriçage, emboutissage, découpage, poinçonnage.
